# EUROPÄISCHE PATENTSCHRIFT

(11) **EP 0 280 757 B1**
(45) Veröffentlichungstag und Bekanntmachung des Hinweises auf die Patenterteilung: **15.01.1997**
(21) Anmeldenummer: 87103238.9
(22) Anmeldetag: 06.03.1987
(51) Int. Cl.: F16H 47/04, F16H 61/46, B60K 41/04

(54) **Steuer- und Regeleinrichtung für ein stufenlos einstellbares Getriebe für Kraftfahrzeuge**
Control system for a continuously variable gearbox for motor vehicles
Dispositif de régulation et de commande pour une boîte de vitesses à variation continue pour véhicules à moteur

(43) Veröffentlichungstag der Anmeldung: 07.09.1988
(60) Teilanmeldung: 96106777.4
(73) Patentinhaber: Meyerle, Michael, D-88074 Meckenbeuren (DE)
(72) Erfinder: Meyerle, Michael, D-88074 Meckenbeuren (DE)
(74) Vertreter: Rösler, Uwe

(56) Entgegenhaltungen:
- EP-A- 0 023 677
- EP-A- 0 069 922
- EP-A- 0 154 029
- DE-A- 2 934 269
- DE-A- 2 934 270
- DE-A- 3 307 629
- DE-A- 3 439 541
- DE-A- 3 504 763
- DE-C- 2 918 448
- US-A- 4 131 035
- US-A- 4 170 153
- US-A- 4 253 347
- US-A- 4 561 327
- US-A- 4 584 907

## Beschreibung

Die Erfindung bezieht sich auf eine Steuer- und Regeleinrichtung für ein stufenlos einstellbares Getriebe für Kraftfahrzeuge, bei dem die Fahrregelung durch mehrere Signale beeinflußt wird, wobei über ein Fahrpedalsignal, ein Motordrehzahlsignal, ein Bremssignal u.a. die Verstellung des Getriebes automatisch geregelt wird.

Steuer- und Regeleinrichtungen dieser Art sind bereits bekannt durch die DE-A-29 34 270, DE-A-29 34 269, DE-A- 27 00 967 und DE-B 24 42 377. Diese Steuer- und Regeleinrichtungen haben jedoch den Nachteil, daß die Vorzüge des stufenlosen Getriebes nur sehr begrenzt ausgeschöpft werden können.

Desweiteren haben diese Einrichtungen den Nachteil, daß Schwierigkeiten beim Motorstarten insbesondere im Kaltzustand, in Verbindung mit einem gattungsbildenden hydrostatischen Leistungsverzweigungsgetriebe wie z.B. nach DE-C-2918448 bestehen.

Die Aufgabe wird durch die Merkmale des Anspruchs 1 gelöst. Weitere vorteilhafte Ausgestaltungen der Erfindung gehen aus den Unteransprüchen und den nachfolgenden Beschreibungen hervor.

Die Erfindung wird an Ausführungsbeispielen anhand von Zeichnungen erläutert. Es zeigen:

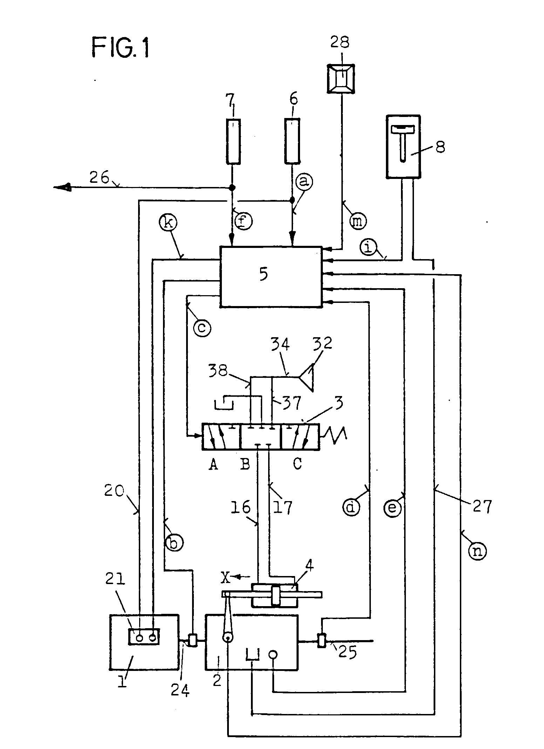

Fig. 1 eine schematische Darstellung einer Steuer- und Regeleinrichtung, insbesondere mit elektronischer Regeleinrichtung.
Fig. 2 eine schematische Darstellung einer Steuer- und Regelungseinrichtung mit vorwiegend hydraulisch-mechanischen Regelungselementen.
Fig. 3 die schematische Darstellung einer Steuer- und Regelungseinrichtung für ein Getriebe mit mehreren Schaltbereichen.
Fig. 4 eine weitere Ausführung der Steuer- und Regelungseinrichtung für ein Getriebe mit mehreren Schaltbereichen.

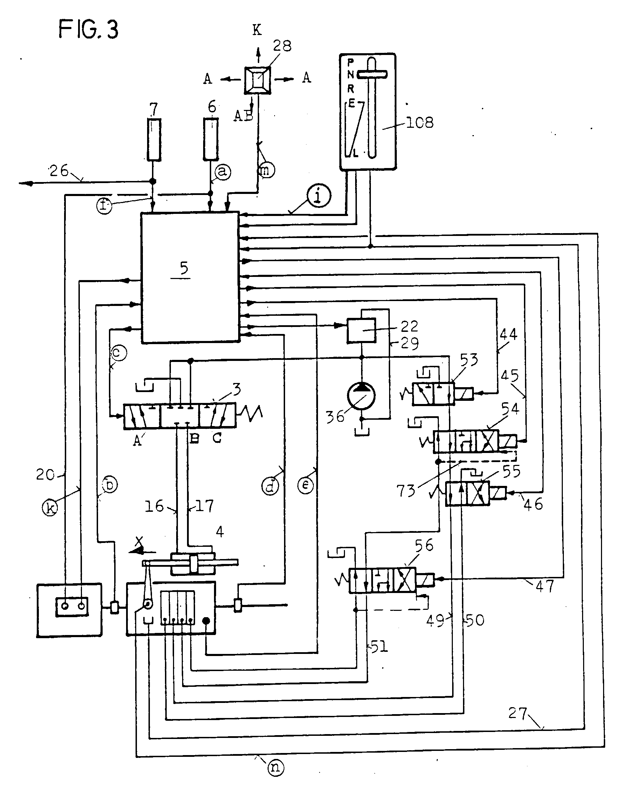

Die erfindungsgemäße Steuer- und Regeleinrichtung besitzt zum Erreichen eines kontinuierlichen und optimalen Beschleunigungsverhaltens und zur allgemeinen Steigerung der Fahrleistungen eine Einrichtung, die die Verstellgeschwindigkeit im wesentlichen lastabhängig dosiert, indem die Verstelleistung der Fahrsituation und dem Fahrerwunsch entsprechend im Rahmen der Maximalleistung des Antriebsmotors angepaßt ist. Dies kann auf verschiedene Art realisiert werden, z.B. durch ein Hochdrucksignale aus dem Eydrostatkreislauf, das entweder den Zulauf zum Verstellmotor 4 vor oder nach dem Hauptregelventil 3 oder den Rücklauf vom Verstellmotor über ein vom Hochdrucksignal geregeltes Drosselventil regelt oder durch entsprechende Modulation des Hauptregelsignals c durch den Einfluß des Hochdrucksignals e, wobei das aus dem Fahrpedalwegsignal a gegebenenfalls Motorkennlinienspeichersignal, Motordrehzahlsignal b resultierendes Differenzsignal c ein Hauptregelventil 3 ansteuert und die Größe der Verstellmenge und damit die Verstellgeschwindigkeit des Verstellzylinders 4 bestimmt. Die Verstellgeschwindigkeit ist dabei so groß, als es das lastabhängige Signal e zuläßt. Ein Beschleunigungsventil 23 sorgt für eine gezielte Verstellölmenge derart, daß z.B. der Rückfluß über die Rücklaufleitung 33 über den Einfluß des Lastsignales e oder / und des Motordrehzahlsignales b oder / und des Abtriebsdrehzahlsignales d entsprechend abgedrosselt wird. Das Beschleunigungsventil 23 kann beliebig in die Rücklaufleitung 33 oder in die Zulaufleitung 34; 16; 17 geschaltet werden. Das Lastsignal e oder / und die die Drosselgröße bestimmenden Signale b und d sind je nach der jeweiligen Betriebssituation so bemessen, daß während der Motorbeschleunigungsphase kein den Fahrkomfort negativ beeinflußender Zugkrafteinbruch entsteht, d. h. daß in der Zeit des für hohe Leistung erforderlichen Motorhochtourens immer definiertes positives Getriebeabtriebsdrehmoment aufrechterhalten bleibt. Bei Fahrzeugen mit besonders hohen Komfortansprüchen sieht die Erfindung vor, die Verstellgeschwindigkeitsregelung durch den zusätzlichen Einfluß der Motordrehzahl über das Motordrehzahlsignal b weiter zu verbessern. Dies ist insbesondere dann zweckmäßig, wenn trotzdem noch unangenehme Motorgeräusche auftreten oder ein angenehmerer Motordrehzahlverlauf vorprogrammiert werden soll. Bei derartigen Fahrzeugforderungen kann die vorprogrammierte Drehzahllinie des Motors als Basis für den Soll-Ist-Wertvergleich dienen und entsprechend das Differenzsignal c bzw. Regelsignal o beeinflussen. Der vorprogrammierte Motordrehzahlverlauf kann ein kontinuierlicher Verlauf über der Zeit sein, wobei der Zeitparameter einen konstanten oder einen veränderlichen Wert in Abhängigkeit zur Fahrpedalstellung des Fahrpedalweges oder der Bewegungsgeschwindigkeit des Fahrpedals sein kann. Z.B. kann dem Fahrpedal 6 ein Verzögerungsventil 39 nachgeschaltet werden, das entweder das Signal Fahrpedalwegsignal a oder das bereits modulierte Regelsignal g zeitlich verzögert auf das Hauptregelventil 3 einwirken läßt, wobei das Motordrehzahlsignal b früher Einfluß auf das Hauptregelventil 3 nimmt, wodurch zuerst die Ventilfunktion A des Hauptregelventils 3 zur Verkleinerung der Getriebeübersetzung zur Wirkung kommt und dadurch den Motor vor zu schnellem Auftouren beim Gasgeben hindert. Dieselbe Funktion kann auch bei Ausführung nach Fig. 3 erzielt werden durch entsprechende Verzögerungseinrichtung bzw. Verzögerungsprogramm im Hauptregelgerät 5, was hier auf elektronischem Weg verwirklicht wird und das Differenzsignal c entsprechend beeinflußt.

Anstelle des Hauptregelventils 3 und des Differenzsignals c sind verschiedene Arten von Verstellsystemen anwendbar. Zum Beispiel sieht die Erfindung alternativ eine ansich bei Hydrostatverstellungen bekannte, in den Zeichnungen nicht dargestellte, Proportionalverstellung vor, bei der das Regelsignal c durch ein der Getriebeübersetzung entsprechendes proportionales Signal ersetzt wird. Bei Anwendung eines leistungsverzweigten Mehrbereichsgetriebesystems werden die Signale nach jeder Bereichsschaltung in umgekehrte Richtung geändert entsprechend der Verstellcharakteristik des Hydrostaten über den gesamten Übersetzungsbereich des Getriebes.

Als weitere Alternative kann, wie ansich bekannt, ein doppelseitig angesteuertes Magnetventil als Hauptregelventil dienen, das vom Hauptregelgerät 5 anstelle des Differenzsignals c jeweils den Verstellimpuls wechselweise über zwei Signalleitungen in die eine oder andere Verstellrichtung erhält.

Das stufenlose Getriebe mit, für die Verbrauchsoptimierung notwendigem großen Overdrivebereich, hat den Nachteil, daß die Motorbremsfähigkeit schwieriger genutzt werden kann als bei Stufengetrieben bzw. Getrieben ohne, oder kleinem Overdrivebereich. Dies liegt darin begründet, daß die Regeleinrichtung immer so ausgelegt ist, daß der Motor auf kleinstmögliche Drehzahl hinsichtlich günstigem Verbrauch geht, wodurch über die entsprechend kleine Getriebeübersetzung nur wenig Bremsmoment über den Getriebestrang auf die Triebräder zur Wirkung kommt.

Zur Beseitigung dieses Problems sieht die Erfindung eine spezielle Einrichtung vor, die es ermöglicht, die Motorbremsfähigkeit in möglichst hohem Maße in fahrzeuggerechter und fahrerfreundlicher Form nutzbar zu machen. Für diesen Zweck ist eine Übersetzungssperreinrichtung 35 vorgesehen. Beim Bremsen wirkt die Getriebeübersetzung über die normale Getrieberegelung mit einem gewissen Motorbremsanteil durch den Einfluß des Bremssignals f auf die Regeleinrichtung 3, 4. Nach Loslassen der Bremse kann sich nun aufgrund dieser Einrichtung die Verstellung nicht mehr in Richtung kleiner Übersetzung ändern, wie dies bei bekannten Regeleinrichtungen der Fall ist, sondern die Übersetzung wird beim Loslassen der Bremse in eine Verstellrichtung blockiert, so daß der Motor in der entsprechend hohen Drehzahl gehalten wird. D.h. daß nach dem Bremsen der Übersetzungszustand beibehalten bleibt und zwar dadurch, daß beim Loslassen der Bremse ein Signal ausgelöst wird, daß das Verstellorgan 4 vorzugsweise in eine Verstellrichtung und zwar in Richtung kleiner Übersetzung festhält. Dies geschieht durch ein vorzugsweise zwischen Verstellmotor 4 und Hauptregelventil 3 geschaltetes Sperrventil 10, das direkt oder über einen mit der Bremseinrichtung in Verbindung stehenden Schalter 11 angesteuert wird. Der Übersetzungszustand bleibt so lange ganz oder in Richtung kleiner Übersetzung blockiert, so lange keines der beiden Pedale - Bremspedal oder Fahrpedal - betätigt werden. Bei nochmaligem Betätigen der Bremse bleibt das Sperrventil 10 in Sperrstellung, wobei der Verstellmotor in Richtung großer Übersetzung X weiter verstellbar ist, indem über eine Steuerleitung 15 und einem Rückschlagventil 12 der Weg zum Rücklauf über die Funktionsstellung C des Hauptregelventils 3 freigibt.

Bei Betätigen des Gaspedals bzw. Fahrpedals 6 wird die Sperrfunktion der Übersetzung aufgehoben und die normale automatische Getrieberegelung freigegeben. Jetzt kann der volle Übersetzungsbereich in beiden Richtungen wieder automatisch ausgenutzt werden.

Das Rückschlagventil 12 sowie das Sperrventil 10 können baulich zu einer Einheit zusammengefaßt werden und wahlweise funktionsgleich in eine der beiden Steuerleitungen 16, 17 angeordnet werden.

Die Übersetzungssperrfunktion kann bei einer überwiegend elektronischen Auslegung der Steuer- und Regelungseinrichtung auch im elektronischen Regelgerät 5 mit integriert werden. In diesem Fall löst das Bremssignal Wegsignal f eine Übersetzungssperrfunktion aus, indem z.B. durch einen Soll-Istwertvergleich das Verstellsignal n konstant bzw. bei Verstellbestrebungen in Richtung kleiner Übersetzung konstant gehalten bleibt und das Differenzsignal c zur Ansteuerung des Hauptregelventils 3 entsprechend moduliert wird. Bei Betätigen des Fahrpedals 6 wird die Sperrfunktion aufgehoben, um die normale Fahrregelfunktion wieder inkraft zu setzen.

In Richtung großer Übersetzung ist die Sperrwirkung außerkraft und zwar deswegen, damit für den Fall, daß nun wieder Zugkräfte gefordert werden entsprechend dem unterschiedlichen Fahrprofil (Steigung) der Fahrregelung der Weg zur Verstellung in Richtung großer Übersetzung freigegeben ist ohne das Fahrpedal 6 betätigen zu müssen. Zweckmäßigerweise ist eine Sicherheitseinrichtung vorgesehen, die die Übersetzungssperrfunktion auch dann ausschaltet, wenn der Motor zu stark hochgetourt wird, insbesondere dann, wenn der Fahrer bei zu starkem Gefälle eine zusätzliche Bremsung über die Betriebsbremseinrichtung unterläßt. Die Aufhebung der Übersetzungssperre erfolgt in diesem Fall über das Motordrehzahlsignal b ab einer entsprechenden Grenzdrehzahl.

Die Übersetzungssperreinrichtung hat besondere Bedeutung für Fahrzeuge, die mit sehr hohem Overdrivebereich ausgestattet sind zur Ausnetzung des Kraftstoffeinsparungspotentials des Motors, was insbesondere beim PKW hohen Wirtschaftlichkeitseffekt hat.

Zur Verbesserung des Getriebewirkungsgrades hat ein Druckmodulator 22 die Aufgabe, den Steuer- und Versorgungsdruck des Getriebes entsprechend den Lastzuständen bzw. den Betriebszuständen des Fahrzeugs ansupassen. Bei herkömmlichen Steuerungssystemen muß der Steuer- une Versorgungsdruck verhältnismäßig hoch sein, um für jede Betriebssituation ausreichend Druck zur Verfügung zu haben. Dies bedeutet, daß bei Fahrzuständen mit niedrigen Beanspruchungen, d. h. im Teillastbereich, unnötig hohe Pumpenleistung aufgewendet werden muß, was den Wirkungsgrad des Getriebes unnötig verschlechtert. Diese unnötigen Leistungsverluste zu beseitigen, ist mit eine Aufgabe dieser Erfindung, die durch diese Druckmodulation gelöst wird.

Durch ein lastabhängiges Signal e wird der Steuerdruck und Versorgungsdruck für das gesamte Getriebe entsprechend den Lastzuständen insbesondere entsprechend den Zugkraftgrößen angepaßt. Für stufenlose Getriebe mit einem hydrostatischen Wandler müssen die Hydrostatkomponenten bei hoher Drehzahl trotz niedrigem Drehmoment mit entsprechend hohem Speisedruck versorgt werden. Für diesen Zweck sieht die Erfindung einen zusätzlichen Einfluß durch ein Motordrehzahlsignal b auf das Druckmodulationsventil 22 vor, wodurch der aus dem Lastsignal e resultierende Steuerdruck bzw. Speisedruck durch das Drehzahlsignal b übersteuert wird bzw., daß das Drehzahlsignal b dem Lastsignal e aufsummiert wird. Auf diese Weise sind alle Betriebssituationen abgesichert und es wird der Vorteil ausgeschöpft, daß in dem überwiegenden Teillastbetrieb Verlustleistungen aus der Steuer- und Speiseölversorgung auf ein Mindestmaß reduziert werden. Mit den Ziel, die Versorgungsölmenge auf ein Mindesmaß zu reduzieren, wird über eine mit der Speisepumpe 36 und dem Druckmodulationsventil 22 in Verbindung stehende Bypaßleitung 29, wie ansich bereits bekannt bei Automatgetrieben, die überflüssige Ölmenge direkt der Ansaugleitung der Speisepumpe 36 zugeführt. Hiermit wird desweiteren erzielt, daß die Ölsumpfmengen verringert werden können und Luftzutritt, was zu hohen Ölaufschäumungen führt, verhindert wird.

Zur Optimierung der Beschleunigungsfähigkeit bzw. zur spontanen Ausschöpfung hoher oder maximaler Motorleistung, insbesondere für sportliches Fahren oder zur Vorbereitung des Motors auf eine schnelle Beschleunigung, z.B. für einen Überholvorgang, ist eine Einrichtung vorgesehen, die es erlaubt, den Motor vor der Beschleunigungsphase auf höhere Drehzahl anzuheben, um bei Beschleunigungsbeginn rasch die volle Motorleistung zur Verfügung zu haben. durch Knopfdruck oder andere Betätigung, z.B. durch Antippen des Wählhebels 8; 108 oder einer irgendwie gearteten Fuß- oder Handbetätigungseinrichtung wird diese Funktion abgerufen, indem kurzzeitig eine Abweichung von der Verbrauchsbestlinie des Motors auf eine Ersatzlinie (Sportprogramm), die je nach Ausgangssituation und Motorcharakteristik unterschiedliche Abweichung von der Verbrauchsbestlinie des Motors haben kann, bewirkt wird. Die Getriebeübersetzung wird dabei automatisch auf ein vorprogrammiertes Maß vergrößert. Bei Abruf dieser Funktion wird das Differenzsignal c durch den zusätzlichen Einfluß des dieser Funktion zugeordnetem Signals i so verändert, daß bei nahezu gleichbleibender Gaspedalstellung bzw. Fahrpedalstellung, Fahrgeschwindigkeit und Motorleistung die Motordrehzahl angehoben wird bis Erreichen der Ersatzlinie. Je nach fahrzeugspezifischen Ansprüchen können mehr oder weniger genaue Werte vorgegeben bzw. vorprogrammiert werden. Z.B. kann ein konstanter Wert als Signal i, das direkt auf das Hauptregelventil 3 wirkt oder in den elektronischen Fahrregler 5 eingegeben wird und bei Abruf der Funktion sofort die Verstelleinrichtung 3, 4 ansteuert. Anstelle des Ersatzprogrammes ist eine individuelle Hochführung des Motors durch den Fahrer möglich, indem z.B. die Wähleinrichtung 108 (Fig. 3) so ausgebildet ist, daß durch Einfluß des Fahrers die Übersetzung beliebig verändert werden kann innerhalb der beiden Stellungen E und L. Bei Stellung E(ECONOMI) ist die normale Vorwärtsfahrstellung gewählt. In dieser Stellung ist der gesamte Übersetzungsbereich verbrauchsoptimal nutzbar. Die Wähleinrichtung 108 ist so ausführbar, daß nach geringfügiger Verstellung in Richtung L, der durch einen Rastendruck spürbar ist, das Ersatzprogramm eingeschaltet bzw. der Overdrivebereich ausgeschaltet werden kann, im Hinblick auf leistungsorientierte Fahrweise. Durch Bewegung des Wählhebels in weitere Zwischenstellungen in Richtung L kann stufenlos die Übersetzung limitiert werden oder diese Einrichtung zur gezielten Hochführung des Motors z.B. für eine Vorbereitung des Motors auf einen Überholvorgang, was für eine außerordentlich sportliche Fahrweise genutzt werden kann. Über das Signal i, z.B. durch einen Potentiometer oder eine entsprechende mechanische Einrichtung, wird für diesen Zweck eine entsprechende Signalgröße in das Fahrgerät 5 eingegeben, wodurch das Differenzsignal c unter Zusammenwirken mit dem Verstellwegsignal n oder Drehzahlvergleich zwischen Antriebsdrehzahlsignal b und Abtriebsdrehzahlsignal d moduliert wird. Hierbei wird durch das Steuersignal i die Größe des Verstellwegsignals n bzw. das Übersetzungssignal festgelegt, woraus das Differenzsignal c bzw. Regelsignal resultiert und dafür sorgt, daß über die Verstelleinrichtung 3, 4 die vorgewählte Übersetzung eingehalten wird. Der Abruf des Ersatzprogrammes bzw. der leistungsorientierten Funktion kann durch weitere andere Einrichtungen abgerufen werden, z.B. durch einen Wählhebel am Lenkrad oder im Bereich des Gaspedals für eine Fußbetätigung angeordnete Betätigungseinrichtung, was beispielsweise durch eine Querbewegung des Fußes über das Vorwählsignal i beliebig ausgelöst werden kann. Die Gaspedalstellung kann bei Abruf dieses Signals i beibehalten werden, wobei der Motor bei gleicher Regelstellung des Motorreglers 21 bleibt und durch die übersetzungsänderungsbedingte Drehmomentabsenkung auf die entsprechend höhere Drehzahl ansteigen kann, wobei die Motorleistung während dieses Vorganges weitgehend konstant bleibt. Zweckmäßigerweise soll diese Einrichtung so ausgebildet werden, daß nach einmaligem Abruf dieser Funktion und Ablauf des gewählten Programmes das normale verbrauchsorientierte Programm automatisch oder auf einfache Weise manuell zurückgerufen wird. Die angesprochenen Wähleinrichtungen am Lenkrad bzw. im Bereich des Gaspedals sind in den Zeichnungen nicht dargestellt.

Zur Steigerung des Bedienungskomforts ist eine Geschwindigkeitsregelung vorgesehen, wie sie ansich bereits bei Stufengetrieben bekannt ist. Mit dieser Einrichtung kann die gewünschte Fahrgeschwindigkeit ab einer gewissen Geschwindigkeitsgröße konstant gehalten und auch gespeichert werden. Ein Wählhebel, der z.B. in Lenkradnähe angebracht werden kann, kann dazu dienen, die Funktionen K (Konstant) oder A (Aus) oder AB (Abruf) abzurufen. Über das Signal m wird der Fahrelektronik 5 der Fahrerwunsch eingegeben. Bei kurzer Betätigung des Hebels in Richtung K wird die momentane Geschwindigkeit beibehalten. Bei Bewegung in Richtung A wird die Geschwindigkeitsregeleinrichtung ausgeschaltet, bei Bewegung in Richtung AB kann die zuletzt einprogrammierte Geschwindigkeitsgröße wieder abgerufen werden. Diese Wähleinrichtung ist beliebig ausführbar und kann auch über verschiedene z.B. Schaltknöpfe in bedienungsfreundlicher Weise ausgebildet werden. Über das Geschwindigkeitseingabesignal m wird das Konstantfahrtsignal bzw. Abtriebsdrehzahlsignal d festgelegt.

Über einen Vergleich des Eingabesignals m und diesem Abtriebsdrehzahlsignal d wird abhängig vom jeweiligen Fahrwiderstand das Motorregelsignal k gebildet und über den Motorregler 21 dem Motor die entsprechende Leistung abgefordert, die dieser vorgewählten Konstantgeschwindigkeit entspricht. Über das Motordrehzahlsignal b wird gleichzeitig im Fahrregler 5 das Differenzsignal c gebildet und zwar derart, daß ständig die verbrauchsoptimale Getriebeübersetzung sowie die verbrauchsoptimale Drehzahl des Motors b eingestellt wird. Dafür sorgt eine im Fahrregler 5 integrierte Vergleichseinrichtung zwischen Motorregelsignal, dessen Signalgröße immer eine Größe der abgerufenen Motorleistung darstellt, und dem Motordrehzahlsignal b in Zusammenwirkung mit dem im Fahrregler 5 integrierten Motorkennlinienfeld, woraus das Differensignal c resultiert und die Verstelleinrichtung 3, 4 entsprechend ansteuert. Bei unterschiedlichem Fahrwiderstand durch unterschiedliches Streckenprofil werden mehr oder weniger große Leistungen gefordert, um die Konstantgeschwindigkeit zu halten. Die beschriebene Regelung paßt sich diesen Gegebenheiten an, indem eine möglicherweise ständige Veränderung der Übersetzung und der Motordrehzahl stattfindet. Z.B. bei steigendem Fahrwiderstand aufgrund einer Steigung, wird zunächst die Motordrehzahl gedrückt, was im Fahrregler 5 gleichzeitig durch den Vergleich mit dem Abtriebsdrehzahlsignal d eine Vergrößerung des Motorregelsignals k bewirkt, um höhere Leistungen abzurufen und gleichzeitig das Differenzsignal c verkleinert, um das Hauptregelventil 3 in Funktionsstellung C zu führen, wodurch der Servomotor 4 in Pfeilrichtung X verstellt wird. Die Verarbeitung der einzelnen Signale kann in der Elektronik auf, in ansich bekannter Weise, realisiert werden.

Die vom Fahrer vorgewählte Konstantfahrgeschwindigkeit wird geändert bzw. ausgeschaltet:
a) durch entsprechende Betätigung des Fahrers,
b) wenn die Maximalleistung des Motors überfordert wird,
c) wenn eine Übersteuerung durch das Gas- bzw. Fahrpedal 6 vorgenommen wird,
d) wenn zu starke Verzögerung, z.B. durch eine extreme Steigung auftritt,
e) wenn das Bremspedal 7 betätigt wird.

Diese Änderungen sind teilweise aus Sicherheitsgründen erforderlich. Bei Erreichen der Grenzleistung des Motors stellt sich automatisch eine der Leistung entsprechende niedrigere Geschwindigkeit ein. Bei Betätigen des Fahrpedals 6 wird das Motorregelsignal k übersteuert, um höhere Leistungen abzurufen entsprechend dem neuen Geschwindigkeitswunsch des Fahrers. Bei Loslassen des Gaspedals stellt sich erneut die vorgewählte Konstantgeschwindigkeit wieder ein. Bei Auftreten plötzlicher zu starker Steigung, d.h. zu großer Verzögerung wird ebenfalls die Geschwindigkeitsregeleinrichtung übersteuert, sofern die Verstellgeschwindigkeit der Verstelleinrichtung 3, 4 überfordert wird. Bei Betätigen des Bremspedals signalisiert das Bremspedalwegsignal f die Aufhebung der Geschwindigkeitsregelfunktion. Nach Loslassen des Fahrpedals bzw. des Bremspedals pendelt sich automatisch die vorgewählte Konstantgeschwindigkeit wieder ein.

Durch Festhalten der Betätigungseinrichtung in Schaltstellung K beschleunigt das Fahrzeug ohne Gasbetätigung, nach dem Loslassen wird die erreichte Geschwindigkeit gehalten und gespeichert. Die Geschwindigkeitsregelung wird ausgeschaltet bei Schaltbetätigung in Richtung A (Aus), bei Betätigung in Richtung AB (Abruf) wird die zuletzt gespeicherte Geschwindigkeit wieder erreicht. Über das Geschwindigkeitsregelsignal m werden die entsprechenden Signale in die Fahrregelung 5 eingebracht.

Bei Anwendung eines hydrostatischen Wandlers, insbesondere in Verbindung mit einem stufenlosen Leistungsverzweigungsgetriebe ist die Hydrostatik mit einem Einspeise- und Spülventil ausgerüstet, das es erlaubt, daß nahezu die gesamte Speiseölmenge in den Hydrostatkreislauf eingespeist wird, um hohe Kühl- und Spülwirkung des Hydrostatkreislaufes zu bewirken. Bei dieser, in den Zeichnungen nicht dargestellten Ausführungsform, wird zweckmäßigerweise das Hydrostatgetriebe unmittelbar nach dem Druckmodulationsventil 22 über die Steuerleitung 34 angeschlossen.

Die von den Verbrauchern, Steuer- und Regelungseinrichtung, sowie Kupplungssteuerung und für die Schmierung, nicht benötigte Ölmenge wird, wie ansich bekannt, direkt oder indirekt über Kühler oder Filter der Saugleitung der Versorgungspumpe 36 zugeführt, um den Luftzutritt auf ein Mindestmaß zu senken.

Zur Erzielung guter Beschleunigungswerte unmittelbar nach dem Gasgeben bei gleichzeitigem kontinuierlichen Beschleunigungsverlauf sorgt ein vorprogrammerter bzw. vorgegebener über einen Zeitparameter festgelegter Verzögerungswert, der dazu dient, eine zu schnell Übersetzungsrückstellung des Getriebes und somit zu schnelles Hochtouren des Motors, z.B. in Forme eines zu starken kick-down-Effektes zu verhindern. Dieser Verzögerungswert kann einen linearen oder nichtlinearen Verlauf über dem Zeitparameter aufweisen und in Abhängigkeit zur Fahrpedalbewegung unterschiedlichen Verlauf haben. Je nach Fahrzeugforderung, die abhängig von der Fahrzeugleistung und der Art des Fahrzeuges, z.B. sportliches Fahrzeug oder Tourenfahrzeug, sehr unterschiedlich sein kann, ist ein mehr oder weniger schnelles Hochtouren des Motors zulässig, was zu einer entsprechend unterschiedlichen Auslegung des Verzögerungswertes führt. Die Verzögerungseinrichtung 39 kann in der Elektronik fest einprogrammiert werden und zwar derart, daß das dem Motorkennlinienspeicher nachgeordnete Signal g entsprechend beeinflußt wird, das mit entsprechender zeitlicher Verzögerung auf die Verstelleinrichtung wirkt.

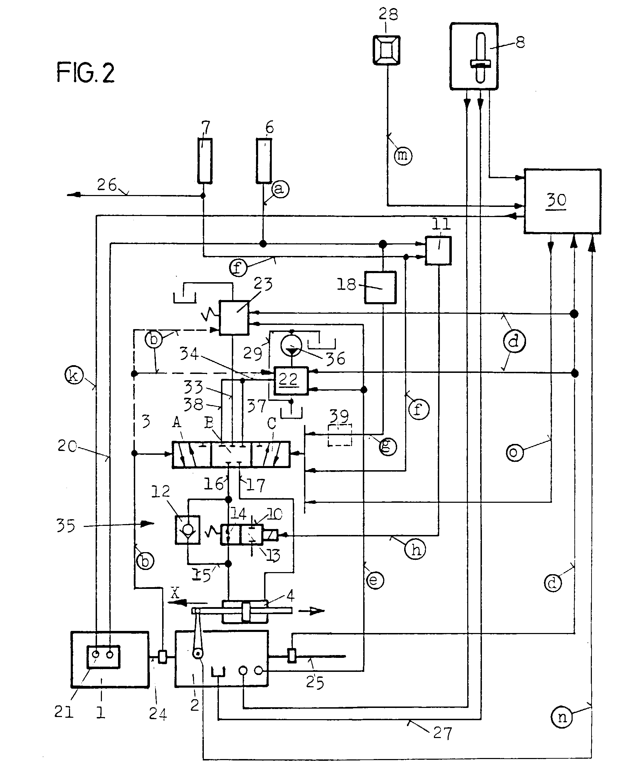

Als Verzögerungseinrichtung 39 kann auch, wie in Fig 2 dargestellt, ein einfaches Verzögerungsventil in Form eines Dämpfungsventiles, z.B. auf hydraulischem Weg, das direkt zwischen die Signalleitung g geschaltet ist, dienen.

Im Hinblick auf ein sehr wirkungsvolles Anfahrverhalten ist diese Verzögerungseinrichtung 39 so ausgelegt, daß z.B. für eine optimale Startfähigkeit des Fahrzeugs das Getriebe nach Loslassen des Bremspedals 7 und spontanem Gasgeben das Getriebe in Abhängigkeit zum Abfall des Bremspedalsignals f und des Motordrehzahlsignals b schnell verstellt auf eine Übersetzungsgröße, die der maximalen Leistungsgröße des Motors enspricht. Durch den Einfluß der Verzögerungseinrichtung 39 kann die Signalgröße g erst entsprechend später auf die Verstellung einwirken und zwar dann, wenn die Beschleunigungsphase abgeschlossen ist, um den Motor danach auf die Verbrauchsbestlinie zu führen, die im Motorkennlinienspeicher 18 vorgegeben ist.

Die Erfindung sieht desweiteren eine Einrichtung zur Limitierung der Getriebeübersetzung vor. Zweck dieser Einrichtung ist es, konstante Getriebeübersetzungen stufenlos vorwählen zu können, was durch die Wähleinrichtung 108 möglich ist. Zwischen den beiden Wählstellungen E und L kann beliebig die gewünschte Übersetzung eingestellt werden. Das Übersetzungssignal wird durch das Signal i in das Hauptregelgerät bzw. Fahrregler 5 eingegeben, wobei über das Signal n die Übersetzungsstellung kontrolliert wird. Vorzugsweise ist die stufenlos einstellbar Übersetzungslimitierung auf einen Hauptbetriebsbereich begrenzt.

Für ein Getriebe mit mehreren Fahrbereichen mit z.B. einem hydrostatischen Wandler in Verbindung mit Leistungsverzweigung muß der Hydrostat mehrmals innerhalb seinem positiven und negativen Verstellbereich durchfahren werden. Für diesen Fall ist eine Bereichsschaltung vorgesehen, die wie ansich bekannt, über Steuerventile 53, 54, 55 und 56 abwechselnd mehrere Bereichskupplungen über die Steuerleitungen 50, 49, 51 und 52 ansteuert (Fig. 3). Die Steuerventile werden hierbei über die Fahrelektronik bzw. Fahrregler 5 durch die Steuerleitungen 44, 45, 46 und 47 angesteuert. Die Steuerventile 53, 54, 55 und 56 werden bei Ausführung nach Fig. 3 elektromagnetisch angesteuert.

Die Bereichsschaltungen finden in der Regel bei Synchronlauf bzw. annäherndem Synchronlauf aller Kupplungselemente der zu schaltenden Kupplung statt. Im Hinblick auf einen weitgehend nahtlosen Bereichsübergang ist eine Kupplungsüberschneidung vorgesehen derart, daß die Folgekupplung, wie ansich bekannt, voll geschlossen ist, bevor die andere Kupplung öffnet. Bei Ausführung nach Fig. 3 sind Kupplungsventile 54, 56 vorgesehen, die diese Kupplungsüberschneidung bewirken. Wird z.B. das Steuerventil 54 über das Schaltsignal 45 angesteuert, so wird durch die Schaltmittelstellung des Schaltventiles zunächst zusätzlich die nächste Bereichskupplung bzw. Folgekupplung mit Druck beaufschlagt und zusätzlich geschlossen, wodurch infolge dieses Kupplungsdruckes ein weiteres Signal über die Druckleitung 73 auf das Steuerventil 54 ausgeübt wird und eine nächste Funktion schaltet, welche bewirkt, daß die andere Kupplung drucklos gesetzt wird und dadurch öffnen kann. Bei Rückschaltung wird das Steuersignal 45 ausgeschaltet, wodurch die Schaltung umgekehrt abläuft, indem zunächst die Mittelstellung des Ventils 54 zur Funktion kommt und wiederum zuerst die Folgekupplung mit Druck beaufschlagt und diese schließt, wonach durch diesen Kupplungsdruck das Signal über die Steuerleitung 74 zum Öffnen der anderen Kupplung ausgelöst wird, indem die linke Funktion des Ventils 54 wirksam wird. Infolgedessen, daß die Schaltungen bei Synchronlauf aller Kupplungselemente stattfinden, ist keine Druckmodulation erforderlich, d.h. die Kupplungen sind unter vollem Kupplungsdruck schaltbar. Lastabhängige Abweichungen vom Synchronlauf der Kupplungselemente beeinflussen die Schaltqualität nur unwesentlich. Durch entsprechede, gegebenenfalls lastabhängige Schaltpunktverschiebung ausgelöst, z.B. durch ein Lastsignal e, ist eine gezielte Anpassung möglich. Voraussetzung hierbei ist die Verwendung lastschaltbarer Bereichskupplungen als Lamellenkupplungen oder spezielle Formschlußkupplungen mit Abweisverzahnung nach DE - C- 37 00 813.7.

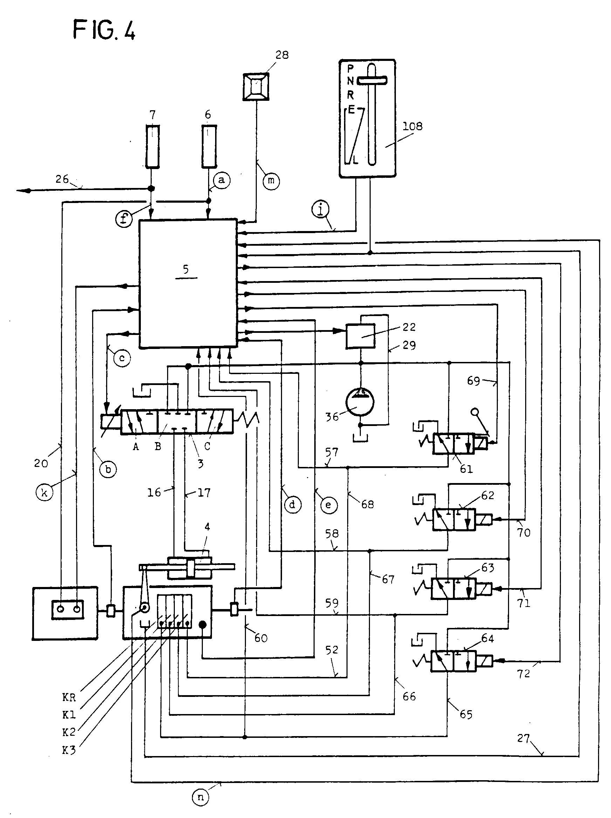

In Ausführung nach Fig. 4 wird für jede Bereichskupplung ein einfaches Kupplungsschaltventil 61, 62, 63, 64 verwendet, das vorzugsweise elektro-magnetisch betätigt wird. Über die Fahrelektronik 5 wird das jeweilige Kupplungsschaltventil angesteuert. Um die für die Schaltqualität notwendige Kupplungsüberschneidung zu erzielen, ist das Schaltprogramm so ausgelegt, daß bei der Bereichsschaltung zunächst die Folgekupplung geschaltet wird, ebenfalls bei Synchronlauf aller Kupplungselemente und nach einem vorprogrammierten konstanten oder variablen, insbesondere von der Öltemperature abhängigen Zeitabstand die andere Kupplung den Öffnungsimpuls erhält.

Bei Ausführung nach Fig. 4 ist jeder Bereichskupplung eine Drucksignalleitung 57, 58, 59, 60 zugeordnet, die dem Fahrgerät bzw. der Fahrelektronik 5 den jeweiligen Kupplungsdruck signalisiert, wie ansich bei lastschaltbaren Automatgetrieben bekannt. Diese Ausführung ist insbesondere für Fahrzeuge mit hohen Ansprüchen an Schaltqualität, wie bei PKW oder Bussen, der vorbeschriebenen kostengünstigeren Lösung vorzuziehen.

Bei dieser Ausführung ist eine gezielte, von der Ölviskosität unabhängige Kupplungsüberschneidung gegeben. Sobald die Folgekupplung geschlossen ist, wird durch deren Drucksignal über die Fahrelektronik 5 das Öffnungssignal der anderen Kupplung erteilt. Um beim Fahrbetrieb im Übersetzungsbereich der Bereichsschaltungen ein häufiges Auf- und Abschalten zu vermeiden, ist eine Schalthysterese-Einrichtung vorgesehen, die nach einer erfolgten Bereichsschaltung eine Rückschaltung erst nach einem gewissen Zeitabstand zuläßt. Zu diesem Zweck ist die Fahrelektronik 5 so programmiert, daß ein Mindestzeitabstand zwischen den einzelnen Schaltfolgen gegeben ist. Nach den Erfahrungen ist eine zeitliche Hysterese von etwa 1 Sekunde ausreichend.

Der Schalthysterese-Effekt kann auf verschiedene Weise ausgeführt werden. Zum Beispiel ist es möglich, durch einen lastabhängigen Differenzwert, der aus dem Hochdruck des Hydrostatgetriebes resultiert, einen zeitunaghängigen Schalthysterese-Effekt zu erzeugen. Auch ein beidseitig beaufschlagbarer Verdrängungskolben mit Drosselventil kann als Hysterese-Einrichtung dienen.

Soll z.B. eine Bereichsschaltung von Bereich 1 nach Fahrbereich 2 erfolgen, so ist zunächst die Kupplung K 1 über den Kupplungsdruck 68 geschaltet. Bei synchronlauf der Kupplungselemente der Kupplung K 2, was durch einen entsprechenden Drehzahlvergleich oder durch entsprechende Stellung des Verstellgliedes des Hydrostaten dem Fahrgerät 5 signalisiert wird, erhält das Kupplungsschaltventil 62 von der Fahrelektronik 5 durch das Steuersignal 70 den Schaltbefehl, wodurch über den Kupplungdruck 67 die Kupplung K 2 geschlossen wird. Über das entsprechende Signal 58 wird dem Fahrregler bzw. der Fahrelektronik 5 der geschlossene Zustand dieser Kupplung signalisiert, wonach spontan durch die Fahrelektronik 5 der Befehl zum Öffnen der Kupplung 1 erteilt wird, indem das Steuersignal 69 ausschaltet. In diesem Schaltvorgang wird gleichzeitig das Differenzsignal c umgekehrt, so daß die Funktionen A und C des Hauptregelventils 3 sich in ihren Funktionen vertauschen, um den Servomotor 4 in umgekehrte Richtung gegenüber dem zuvor geschalteten Bereich zu bewegen. Die Bereichsschaltungen sind je nach dem zu schaltenden Bereich am jeweiligen Ende der Hydrostatverstellung, d.h. am jeweiligen Ende rechts oder links des Servomotors 4. Dies trifft insbesondere bei stufenlosen hydrostatisch-mechanischen Verzweigungsgetrieben zu.

Die Umschaltung vom ersten in den Rückwärtsbereich kann bereits während der Fahrt vorgewählt werden, wobei der Schaltablauf mit den üblichen Bereichsschaltungen identisch ist, indem spontan bei Erreichen des Fahrzeugstillstandes, d.h. bei Synchronlauf aller Kupplungselemente der Rückwärtsbereichskupplung die Fahrelektronik 5 den Schaltbefehl über das Steuersignal 72 erteilt und das Kupplungsventil 64 ansteuert, diese Kupplung füllt und sofort über das, über den Kupplungsdruck ausgelöste Signal 60 das Öffnungssignal für die erste Bereichskupplung erteilt, indem das Steuersignal 69 des Ventils 61 ausschaltet.

Innerhalb der Schaltphase ist die Getriebeverstelleinrichtung blockiert, d.h. sofort nach Einleitung der Bereichsschaltung wird das Hauptregelventil 3 auf Sperrstellung geschaltet oder das Verstellorgan ist durch Anlage an seiner Endlage blockiert.

Über die Steuerleitung 27 wird über die Wähleinrichtung 108 eine Parksperreinrichtung angesteuert.

Zur Verbesserung der Starteigenschaften, insbesondere bei Kaltzustand, ist die Hydrostatverstellung, wie ansich bekannt, in der Neutralstellung, z.B. durch übliche Feder-Nullzentrierung, bei geöffneten Bereichskupplungen fixiert. Nach Vorwahl der Fahrtrichtung wird durch entsprechendes Signal der Hydrostat vor Schließen der entsprechenden Bereichskupplung auf Anfahrstellung ausgeschwenkt, die bei einem leistungsverzweigten Hydrostatgetriebe, je nach Auslegung, dem Endpunkt der Hydrostatverstellung entsprechen kann.

### Bezugszeichen

1 Antriebsmotor
2 Getriebe
3 Hauptregelventil
4 Servomotor
5 Fahrregler /Hauptregelgerät/ Fahrelektronik
6 Fahrpedal
7 Bremspedal
8 Wähleinrichtung
9 Wählhebel
10 Sperrventil
11 Sperrschalter
12 Rückschlagventil
13 Ventilstellung
14 Ventilstellung
15 Steuerleitung
16 Steuerleitung
17 Steuerleitung
18 Motorkennlinienspeicher

20 Steuerleitung
21 Motorregler
22 Druckmodulator
23 Beschleunigungsventil
24 Antriebswelle
25 Abtriebswelle
26 Bremsleitung
27 Schaltleitung (Parksperre u.a.)
28 Wähleinrichtung (Tempomat)
29 Bypaßleitung
30 Steuer- u. Regelgerät
31 Wechselventil
32 Speisedruck
33 Rücklaufleitung
34 Zulaufleitung
35 Übersetzungssperreinrichtung
36 Speisepumpe
37 Zulaufleitung
38 Zulaufleitung
39 Verzögerungseinrichtung

41 Steuerleitung (Wechselventil)
42 Steuerleitung (Wechselventil)
43 Steuerleitung (Wechselventil R-B.)
44 Schaltsignal
45 Schaltsignal
46 Schaltsignal
47 Schaltsignal
48 Steuersignal
49 Steuersignal
50 Steuersignal
51 Steuersignal
52 Steuersignal
53 Schaltventil
54 Schaltventil
55 Schaltventil
56 Schaltventil
57 Drucksignal
58 Drucksignal
59 Drucksignal
60 Drucksignal
61 Schaltventil
62 Schaltventil
63 Schaltventil
64 Schaltventil
65 Druckleitung
66 Druckleitung
67 Druckleitung
68 Druckleitung
69 Steuersignal
70 Steuersignal
71 Steuersignal
72 Steuersignal
73 Steuersignal
74 Steuersignal

### Bezugszeichen

### 108 Wähleinrichtung

A Ventilstellung
B Ventilstellung
C Ventilstellung
a Fahrpedalwegsignal
b Motordrehzahlsignal
c Differenzsignal/
   Hauptregelsignal
d Abtriebsdrehzahlsignal
e Lastsignal
f Breissignal
g Signal (nach Motorkennlinie)
   (moduliertes Gaspedalsignal)
h Sperrsignal
i Steuersignal
k Motorregelsignal (Tempomat)
l
m Signal (Tempomat)
n Verstellsignal
o Regelsignal

KR R-Kupplung
K1 1. Bereichskupplung
K2 2. Bereichskupplung
K3 3. Bereichskupplung

## Patentansprüche

1. Steuer- und Regeleinrichtung für ein stufenloses hydrostatisch-mechanisches Leistungsverzweigungsgetriebe (2), insbesondere für Kraftfahrzeuge, mit mehreren Schaltbereichen, bei dem der hydrostatische Wandler beim Anfahren auf Fördervolumen, vorzugsweise auf den Endpunkt der Hydrostatverstellung, ausgeschwenkt ist, was der Anfahrstellung entspricht,
**dadurch gekennzeichnet**, daß der hydrostatische Wandler eine Verstelleinrichtung (3,4) besitzt, die beim Starten des Motors (1) in Neutralstellung gehalten wird, wobei die Bereichskupplungen (K1-K3) geöffnet sind und daß vor schließen der entsprechenden Bereichskupplung (K1) für den ersten Schaltbereich der hydrostatische Wandler durch ein entsprechendes Signal auf Anfahrstellung ausgeschwenkt wird, die je nach Getriebeauslegung dem Endpunkt der Hydrostatverstellung entsprechen kann.

2. Regeleinrichtung nach Anspruch 1 ,
**dadurch gekennzeichnet,** daß ein Druckaufnehmer (e) für den Hydrostat-Arbeitsdruck vorgesehen ist, und
daß das Verstellorgan (4) in Abhängigkeit von dem Ausgangssignal(en) des oder der Aufnehmer für lastabhängige Signale kontinuierlich mit einer Änderungsgeschwindigkeit verstellt wird, die von dem Ausgangssignal des Druckaufnehmers für den Hydrostat-Arbeitsdruck abhängt.

3. Regeleinrichtung nach Anspr. 1,
**dadurch gekennzeichnet,**
daß eine Beschleunigungseinrichtung vorgesehen ist, die die Verstellgeschwindigkeit des stufenlosen Getriebes derart regelt, daß bei Beschleunigung ein oder mehrere die Motorbeschleunigung drosselnde Signale (e, g, o) auf die Verstelleinrichtung (3, 4) wirken,
daß ein Lastsignal (e) oder / und ein Motordrehzahlsignal (b) die Steuerdrücke und Versorgungsdrücke des Getriebes über einen Druckmodulator (22) moduliert und daß eine Einrichtung zur Fahr -leistungssteigerung vorgesehen ist, die durch Vorwahl des Fahrers anspricht und über Signale aus einem vorprogrammierten konstanten oder variablen Wert die Motordrehzahl bereits vor Abruf einer hohen Leistung anhebt.

4. Regeleinrichtung nach Anspr. 1,
**dadurch gekennzeichnet,**
daß eine Beschleunigungseinrichtung vorgesehen ist, die die Verstellgeschwindigkeit des stufenlosen Getriebes derart regelt, daß bei Beschleunigung ein oder mehrere die Motorbeschleunigung drosselnde Signale (e, g, o) auf die Verstelleinrichtung (3, 4) wirken, und
daß eine Geschwindigkeitsregeleinrichtung (28, 30 bzw. 28, 5) vorgesehen ist, die je nach getroffener Wahl des Fahrers eine konstante Fahrgeschwindigkeit des Fahrzeugs aufrecht erhält, indem über einen Soll-Istwertvergleich zwischen einem Abtriebsdrehzahlsignal (d) und einem Signal, das der vorgewählten Geschwindigkeit entspricht, dem Antriebsmotor (1) das entsprechende Regelsignal (k) zugeht, so daß automatisch durch den Motorregler (21) die entsprechende Antriebsleistung im Rahmen der Maximalleistung des Motors abgerufen wird.

5. Regeleinrichtung nach Anspruch 1
**dadurch gekennzeichnet,**
daß ein Beschleunigungsventil (23) zur Regelung der Verstellgeschwindigkeit vorgesehen ist, das in der Rücklaufleitung (33) angeordnet ist (Figur 2).

6. Regeleinrichtung nach Anspruch 1
**dadurch gekennzeichnet,**
daß ein Beschleunigungsventil (23) vorgesehen ist, das in einer der Zulaufleitungen (34, 37, oder 38) angeordnet ist (nicht dargestellt).

7. Regeleinrichtung nach Anspruch 1
**dadurch gekennzeichnet,**
daß die Beschleunigungseinrichtunz (23) über ein Hochdrucksignal (e) beeinflußt wird.

8. Regeleinrichtung nach Anspruch 1
**dadurch gekennzeichnet,**
daß die Beschleunigungseinrichtung (23) durch ein Verzögerungssignal (nicht dargestellt) beeinflußt bzw. geregelt wird.

9. Regeleinrichtung nach Anspruch 1
**dadurch gekennzeichnet,**
daß die Beschleunigungseinrichtung (23) durch ein Abtriebsdrehzahlsignal (d) allein oder in Verbindung mit anderen Signalen (b, e oder / und Verzögerungssignal) beeinflußt wird.

10. Regeleinrichtung nach Anspruch 2
**dadurch gekennzeichnet**,
daß eine Übersetzungssperreinrichtung (35) vorgesehen ist, die nach dem Bremsvorgang eine Getriebeverstellung in Richtung kleiner Übersetzung verhindert, so lange kein weiteres Fahrersignal z.B. durch Betätigen des Fahrpedals (6) erfolgt.

11. Regeleinrichtung nach Anspruch 2
**dadurch gekennzeichnet,**
daß die Übersetzungssperreinrichtung (10, 11, 12) durch ein Bremssignal (f) und das Fahrpedalsignal (a) angesteuert wird.

12. Regeleinrichtung nach Anspruch 2
**dadurch gekennzeichnet,**
daß der Übersetzungssperreffekt durch ein Signal (f), das durch Loslassen der Bremse ausgelöst wird, einsetzt.

13. Regeleinrichtung nach Anspruch 2
**dadurch gekennzeichnet,**
daß bei Betätigen des Fahrpedals (6) die Übersetzungssperrfunktion aufgehoben wird.

14. Regeleinrichtung nach Anspruch 2
**dadurch gekennzeichnet,**
daß die Übersetzungssperre nur in eine Verstellrichtung wirkt.

15. Regeleinrichtung nach Anspruch 2
**dadurch gekennzeichnet,**
daß die Übersetzungssperreinrichtung (35) aus einem Sperrventil (10), und einem Rückschlagventil (12) besteht.

16. Regeleinrichtung nach Anspruch 2
**dadurch gekennzeichnet,**
daß das Übersetzungssperrventil (10) von einem Sperrschalter (11) angesteuert wird, der mit einem Bremssignal (f) und dem Fahrpedalsignal (a) in Wirkverbindung steht.

17. Regeleinrichtung nach Anspruch 2
**dadurch gekennzeichnet,**
daß die Übersetzungssperreinrichtung alternativ durch ein Signal angesteuert wird, das aus der Motordrehzahl resultiert, derart, daß die Motordrehzahl hochgehalten wird, um entsprechendes Bremsmoment zu erzeugen.

18. Regeleinrichtung nach Anspruch 2
**dadurch gekennzeichnet,**
daß bei Schubbetrieb im Fahrregler (5) das Motordrehzahlsignal (b) mit einer vorprogrammierten Motordrehzahlgröße z. B. Motordrehzahlkurve, die in Abhängigkeit mit motorspezifischen und akustisch akzeptablen Bremswerten steht, verglichen und entsprechend das Differenzsignal (c) beeinflußt wird, sodaß über die Verstelleinrichtung (3, 4) eine automatische Anpassung an die vorprogrammierten Werte erfolgt.

19. Regeleinrichtung nach mehreren Ansprüchen 1 bis 18
**dadurch gekennzeichnet,**
daß im Schubbetrieb das Differenzsignal (c) zusätzlich durch ein Lastsignal (e) beeinflußt wird, das verhindert, daß unangenehme Motorbremseffekte und Motorgeräusche durch Motorauftouren auftreten.

20. Regeleinrichtung nach Anspruch 3
**dadurch gekennzeichnet,**
daß ein Druckmodulator (22) als Druckregelventil ausgebildet ist,der neben dem Lastsignal (e) durch ein Motordrehzahlsignal (b) oder / und ein Abtriebsdrehzahlsignal beeinflußt wird.

21. Regeleinrichtung nach mehreren der Ansprüche 1 bis 20
**dadurch gekennzeichnet,**
daß eine Bypaßleitung (29) zwischen Druckmodulator (22) und Saugleitung der Speisepumpe (36) vorgesehen ist zur Begrenzung der Steuerölmenge auf das notwendige Maß.

22. Regeleinrichtung nach mehreren der Ansprüche 1 bis 21
**dadurch gekennzeichnet,**
daß ein Motorkennlinienspeicher (18) vorgesehen ist, der zwischen Motorregler (21) und Fahrpedal (6) oder in der Getrieberegeleinrichtung direkt (wie dargestellt in den Figuren 1 und 2) angeordnet ist und entsprechend die Verstellsignale (g oder c) zur Verbrauchsoptimierung beeinflußt.

23. Regeleinrichtung nach Anspruch 3
**dadurch gekennzeichnet,**
daß ein Ersatzprogramm für spontan abrufbare Maximalleistung vorgesehen ist, die vom Fahrer vorwählbar ist.

24. Regeleinrichtung nach Anspruch 3 und 23
**dadurch gekennzeichnet,**
daß die Wähleinrichtung zum Vorwählen des Ersatzprogrammes in der Hauptwähleinrichtung (8) mitenthalten ist, wodurch z.B. durch Betätigung des Wählhebels (8) die entsprechende Vorwahl ausgelöst werden kann.

25. Regeleinrichtung nach Anspruch 3, 23 und 24
**dadurch gekennzeichnet,**
daß nach einmaligem Abruf des Ersatzprogrammes bzw. des leistungsorientierten Programmes automatisch eine Umschaltung in das Normalprogramm für verbrauchsoptimalen Betrieb erfolgt, und zwar dadurch, daß die vom Fahrer eingegebenen entsprechenden Signale gelöscht werden.

26. Regeleinrichtung nach Anspruch 3, 23 bis 25
**dadurch gekennzeichnet,**
daß das Ersatzprogramm die Motordrehzahl nach ausgelöster Vorwahl anhebt durch entsprechende Übersetzungsänderung, indem die Regelsignale bzw. das Differenzsignal (c) die Getriebeübersetzung entsprechend ändern.

27. Regeleinrichtung nach Anspruch 4
**dadurch gekennzeichnet,**
daß die Geschwindigkeitsregeleinrichtung für Konstantfahrt eine Wähleinrichtung (28) besitzt, die durch Knopfdruck oder entsprechender Betätigung des Fahrers ein Konstantfahrtsignal (m) auslöst, was als Basis für die Leistungsregelung zur Einhaltung der gewählten Geschwindigkeit dient.

28. Regeleinrichtung nach Anspruch 4 und 27
**dadurch gekennzeichnet,**
daß die Konstantfahrtregelung aufgehoben bzw. übersteuert wird, dadurch,
a) daß der Fahrer die Konstantfahrtregelung ausschaltet oder einen anderen Geschwindigkeitswunsch eingibt über die Wähleinrichtung (28)
b) daß das Leistungsangebot des Motors überschritten wird
c) daß der Fahrer durch Betätigen des Gaspedals bzw. Fahrpedals (6) höhere Geschwindigkeit fordert
d) daß durch zu starke Verzögerung des Fahrzeugs z.B. durch eine extreme Steigung die Fahrregelung überfordert wird
e) daß durch Betätigen des Bremspedals die Geschwindigkeit reduziert wird.

29. Regeleinrichtung nach Anspruch 4, 27 und 28
**dadurch gekennzeichnet**
daß die zuletzt gespeicherte Geschwindigkeit abrufbar ist durch entsprechende Betätigung an der Wähleinrichtung (28) ("Abruf").

30. Regeleinrichtung nach einem oder mehreren der Ansprüche 1 bis 29
**dadurch gekennzeichnet,**
daß der motorseitige Bremsanteil lastabhängig und motordrehzahlabhängig dosiert wird und zwar derart, daß durch ein Begrenzungssignal (nicht dargestellt) eine vorgegebene Motordrehzahlgröße in Zusammenhang mit einem akzeptablen Motorgeräusch begrenzt wird.

31. Regeleinrichtung nach einem oder mehreren der Ansprüche 1 bis 30
**dadurch gekennzeichnet,**
daß in der Verstellgeschwindigkeitsregelung eine vorgegebene Motordrehzahlkurve über den Zeitparameter gespeichert ist, wobei der Zeitparameter durch eine Dämpfungseinrichtung oder durch unterschiedliche Zeitparameter in Abhängigkeit zur Fahrpedalstellung bzw. Bewegungsgeschwindigkeit des Fahrpedals gesteuert wird.

32. Regeleinrichtung nach mehreren der Ansprüche 1 bis 31
**dadurch gekennzeichnet,**
daß eine Hysterese-Einrichtung eingebaut bzw. einprogrammiert ist, die durch ein Schaltsignal innerhalb der Bereichsschaltung angesteuert wird und zeitabhängig oder / und lastabhängig eine Bereichsschaltung verhindert.

## Claims

1. Controller and feedback controller for controlling a continuously variable branched hydrostatic-mechanical transmission, for motor vehicles in particular, providing for several speed ranges, wherein by the time of start-up the hydrostatic converter is pivoted, preferably to the terminal point of hydrostat adjustment, which corresponds to the start-up position,
**characterized** in that said hydrostatic converter comprises adjusting means (3, 4) which is maintained in neutral position when the engine (1) is started, with the range clutches (K1 - K3) being opened, and that prior to the closing of the respective range clutch (K1) for the first speed range said hydrostatic converter is pivoted in response to a respective signal into the start-up position, which, depending on the configuration of the transmission, may correspond to the terminal point of hydrostat adjustment.

2. Controller according to Claim 1,
**characterized** in that a pressure sensor (e) is provided to detect the operating pressure of the hydrostat, and
that the actuator element (4) is continuously adjusted, as a function of the output signal(s) of said sensor(s) for load-dependent signals, at an adjusting rate which depends on the output signal of said pressure sensor detecting the operating pressure of said hydrostat.

3. Controller according to Claim 1,
**characterized** in that accelerating means are provided to control the adjusting rate of said continuously variable transmission such that in the event of acceleration one or several signals (e, g, o) throttling the engine acceleration act upon said adjusting means (3, 4),
that a load signal (e) and/or an engine speed signal (b) modulates the control pressures and supply pressures of the transmission via a pressure modulator (22), and
that means are provided to increase the running power, which respond to the driver's preselection and which increase the engine speed on the basis of a preprogrammed constant or variable value as early as prior to the demand of a high power.

4. Controller according to Claim 1,
**characterized** in that accelerator means are provided to control the adjusting rate of the continuously variable transmission such that in the event of acceleration one or several signals (e, g, o), which throttle the engine acceleration, act upon said adjusting means (3, 4), and
that speed control means (28, 30 or 28, 5, respectively) are provided which, depending on the selection made by the driver, maintain a constant driving speed of the vehicle by supplying the corresponding control signal (k) to the driving engine (1) by a set/actual comparison between an output speed signal (d) and a signal corresponding to the preselected speed, so that the engine controller (21) automatically demands the appropriate driving power within the scope of the maximum power of the engine.

5. Controller according to Claim 1,
**characterized** in that an acceleration valve (23) is provided for feedback control of the adjusting rate, which is disposed in the return line (33) (Figure 2).

6. Controller according to Claim 1,
**characterized** in that an acceleration valve (23) is provided which is disposed in one of the supply lines (34, 37 or 38) (not illustrated).

7. Controller according to Claim 1,
**characterized** in that said accelerator device (23) is influenced by a high-pressure signal (e).

8. Controller according to Claim 1,
**characterized** in that said accelerator device (23) is influenced or controlled, respectively, by a delay signal (not illustrated).

9. Controller according to Claim 1,
**characterized** in that said accelerator device (23) is influenced by an output speed signal (d) alone or in combination with other signals (b, e or/and delay signal).

10. Controller according to Claim 2,
**characterized** in that gear ratio locking means (10, 11, 12) are provided which, following brake application, prevents a change of the gearing in a direction towards reduction until the driver enters another signal, e.g. by actuating the accelerator pedal (6).

11. Controller according to Claim 2,
**characterized** in that said gear ratio locking means (10, 11, 12) are controlled by a brake signal (f) and the accelerator pedal signal (a).

12. Controller according to Claim 2,
**characterized** in that the gear ratio locking effect is activated in response to a signal (f) which is triggered by brake release.

13. Controller according to Claim 2,
**characterized** in that the gear ratio locking function is eliminated when the accelerator pedal (6) is actuated.

14. Controller according to Claim 2,
**characterized** in that the gear lock is operative only in one direction of adjustment.

15. Controller according to Claim 2,
**characterized** in that said gear ratio locking means (35) consist of a locking valve (10) and a non-return valve (12).

16. Controller according to Claim 2,
**characterized** in that said gear ratio locking valve (10) is controlled by a locking switch (11) which is operatively connected to a brake signal (f) and said accelerator pedal signal (a).

17. Controller according to Claim 2,
**characterized** in that said gear ratio locking means are alternatively controlled by a signal resulting from the engine speed, such that the engine speed is maintained at a high level so as to generate an appropriate braking torque.

18. Controller according to Claim 2,
**characterized** in that in pushing operation said engine speed signal (b) is compared against a preprogrammed engine speed magnitude, e.g. the engine speed characteristic which depends on engine-specific and acoustically acceptable braking values, and an appropriate influence is taken on the differential signal (c) in said speed controller (5), such that an automatic adaptation to the preprogrammed values will be achieved via said adjusting means.

19. Controller according to several of Claims 1 to 18,
**characterized** in that in pushing operation said differential signal is moreover influenced by a load signal (e) which prevents non-agreeable engine brake effects and engine noise as a result of engine speed-up from occurring.

20. Controller according to Claim 3,
**characterized** in that a pressure modulator (22) is configured as a pressure adjusting valve which is influenced not only by said load signal (e) but also by an engine speed signal (b) or/and an output speed signal.

21. Controller according to several of Claims 1 to 20,
**characterized** in that a by-pass line (29) is provided between said pressure modulator (22) and the intake pipe of the supply pump (36) for limiting the controlling oil quantity to the necessary measure.

22. Controller according to several of Claims 1 to 21,
**characterized** in that a memory (18) is provided for storing engine characteristics, which is disposed between said engine controller (21) and said accelerator pedal (6) or directly in said transmission controller (as is illustrated in Figures 1 and 2), and which takes an appropriate influence on the adjusting signals (g or c) for optimizing the consumption.

23. Controller according to Claim 3,
**characterized** in that a stand-by programme is provided for a maximum power which may be demanded spontaneously, which programme may be preselected by the driver.

24. Controller according to Claims 3 and 23,
**characterized** in that the selector means for preselection of said stand-by programme is equally incorporated onto the principal selector means (8), so that an appropriate preselection may be triggered, e.g. by operation of the selector lever (8).

25. Controller according to Claims 3, 23 and 24,
**characterized** in that after said stand-by programme or the power-oriented programme has been called once the operation is automatically changed over to the normal mode programme for operation at optimum consumption, specifically by cancellation of the respective signals input by the driver.

26. Controller according to Claims 3, 23 to 25
**characterized** in that after triggering of the preselection function, said stand-by programme increases the engine speed by an appropriate change of the gear ratio, by way of an appropriate change of the gear ratio induced by said control signals or said differential signal (c), respectively.

27. Controller according to Claim 4,
**characterized** in that said speed controller for constant-speed driving comprises selector means (28) which, in response to the operation of a push button or a appropriate action taken by the driver, triggers a constant-drive signal (m) which serves as a basis for feedback power control for observing the selected speed.

28. Controller according to Claims 4 and 27,
**characterized** in that the constant-drive control function is suppressed or overridden by the facts
(a) that the driver deactivates the constant-drive control function or enters another desired speed via said selector means (28),
(b) that the power available from the engine is exceeded,
(c) that the driver actuates the accelerator pedal (6) so as to demand a higher speed,
(d) that the drive control system is excessively loaded as a result of an excessive deceleration of the vehicle, e.g. by virtue of an extreme slope,
(e) that speed is reduced by actuation of the decelerator pedal.

29. Controller according to Claims 4, 27 and 28,
**characterized** in that the speed stored last may be retrieved by an appropriate operation at said selector means (28) ("call").

30. Controller according to any of several of Claims 1 to 29,
**characterized** in that the fraction in braking action on the engine part is dosed as a function of the load and the engine speed, specifically in a way that a restricting signal (not illustrated) restricts a predetermined magnitude of the engine speed in relation to an acceptable engine noise.

31. Controller according to any of several of Claims 1 to 30,
**characterized** in that a predetermined engine speed characteristic is stored by the time parameter in said adjusting rate controller, with said time parameter being controlled by an attenuating means or by different time parameters as a function of the position of said accelerator pedal or the rate of accelerator movement, respectively.

32. Controller according to several of Claims 1 to 31,
**characterized** in that a hysteresis means is incorporated or included by programming, respectively, which is controlled by a switching signal within the range controller and which prevents range control action as a function of time or/and as a function of load.

## Revendications

1. Dispositif de commande et de réglage d'une transmission à réglage continu (2) hydrostatique-mécanique à ramification de puissance, en particulier pour véhicules à moteur, à plusieurs régimes de marches, dans lequel le convertisseur hydrostatique est pivoté, à la mise en marche au volume de refoulement, de préférence au point de fin de réglage l'hydrostat, ce qui correspond à la position de démarrage,
**caractérisé** en ce que ledit convertisseur hydrostatique comprend un moyen de réglage (3, 4), qui est tenu en position neutre au démarrage du moteur (1), les dispositifs d'embrayage de vitesses (K1 - K3) étant ouverts, et en ce qu'avant la fermeture du dispositif d'embrayage de vitesses correspondant (K1) pour la première vitesse dudit convertisseur hydrostatique est pivoté, en réponse à un signal correspondant, dans la position de démarrage, qui, selon la configuration de la transmission, peut correspondre au point de fin de réglage de l'hydrostat.

2. Dispositif de réglage selon la revendication 1,
**caractérisé** en ce qu'un capteur de pression (e) est prévu à détecter la pression de service de l'hydrostat, et
en ce que l'organe de réglage (4) est ajusté en continu, en fonction du ou signal ou des signaux de sortie du ou des capteur(s) à recevoir des signaux dépendants de la charge, à une vitesse de changement qui dépend du signal de sortie dudit capteur de pression à détecter la pression de service de l'hydrostat.

3. Dispositif de réglage selon la revendication 1,
**caractérisé** en ce qu'un moyen accélérateur est prévu, qui règle la vitesse de réglage de la transmission à réglage continu de façon qu'à une accélération un ou plusieurs signaux (e, g, o), qui étranglent l'accélération du moteur, agissent sur ledit moyen de réglage (3, 4),
en ce qu'un signal de charge (e) et/ou un signal de régime de moteur (b) module les pressions de commande et les pressions d'alimentation de la transmission via un modulateur de pression (22), et
en ce qu'un moyen à augmenter la prestation du véhicule est prévu, qui répond à une préselection du conducteur et augmente, par des signaux dérivés d'une valeur constante ou variable préprogrammée, la vitesse du moteur avant la demande d'une haute puissance déjà.

4. Dispositif de réglage selon la revendication 1,
**caractérisé** en ce qu'un moyen accélérateur est prévu, qui règle la vitesse de réglage de la transmission à réglage continu de façon qu'à une accélération un ou plusieurs signaux (e, g, o), qui étranglent l'accélération du moteur, agissent sur ledit moyen de réglage (3, 4), et
en ce qu'un moyen de réglage de vitesse (28, 30 ou respectivement 28, 5) est prévu, qui, selon la choix fait par le conducteur, maintient une vitesse constante de roulement du véhicule, en alimentant le signal de réglage (k) correspondant au moteur d'entraînement (1) par une comparaison des chiffres prévus avec les chiffres réels entre un signal de vitesse de sortie (d) et un signal qui correspond à la vitesse présélectionnée, de façon que l'asservisseur de moteur (21) demande, de façon automatique, la puissance d'entraînement appropriée dans le cadre de la puissance maximale du moteur.

5. Dispositif de réglage selon la revendication 1,
**caractérisé** en ce qu'une soupape d'accélération (23) est prévue à régler la vitesse de réglage, qui est disposée dans la conduite de retour (33) (figure 2).

6. Dispositif de réglage selon la revendication 1,
**caractérisé** en ce qu'une soupape d'accélération (23) est prévue, qui est disposée dans une des conduites d'alimentation (34, 37 ou 38) (non représentée).

7. Dispositif de réglage selon la revendication 1,
**caractérisé** en ce que ledit dispositif accélérateur (23) est assujetti à l'influence d'un signal haute pression (e).

8. Dispositif de réglage selon la revendication 1,
**caractérisé** en ce que ledit dispositif accélérateur (23) est assujetti à ou respectivement réglé par un signal de retard (non illustré).

9. Dispositif de réglage selon la revendication 1,
**caractérisé** en ce que ledit dispositif accélérateur (23) est assujetti à un signal de vitesse de sortie (d), soit seul ou en combinaison avec des autres signaux (b, e ou/ et signal de retard).

10. Dispositif de réglage selon la revendication 2,
**caractérisé** en ce qu'un moyen d'arrêt de (dé)multiplication (10, 11, 12) est prévu, qui, après le freinage, empêche un changement de la transmission en sens vers la réduction, jusqu'un autre signal est issu par le conducteur, p.ex. par actionnement de la pédale de l'accélérateur (6).

11. Dispositif de réglage selon la revendication 2,
**caractérisé** en ce que ledit moyen d'arrêt de (dé)multiplication (10, 11, 12) est asservi par un signal de freinage (f) et le signal de la pédale de l'accélérateur ().

12. Dispositif de réglage selon la revendication 2,
**caractérisé** en ce que l'activation de l'effet d'arrêt de (dé)multiplication commence en réponse à un signal (f), qui est déclenché quand le frein est relâché.

13. Dispositif de réglage selon la revendication 2,
**caractérisé** en ce que la fonction d'arrêt de (dé)multiplication est éliminée quand la pédale de l'accélérateur (6) est commandée.

14. Dispositif de réglage selon la revendication 2,
**caractérisé** en ce que l'arrêt de (dé)multiplication est effectif seulement dans un sens de réglage.

15. Dispositif de réglage selon la revendication 2,
**caractérisé** en ce que ledit moyen d'arrêt de (dé)multiplication (35) est formé par une soupape d'arrêt (10) et par une soupape de retenue (12).

16. Dispositif de réglage selon la revendication 2,
**caractérisé** en ce que ladite soupape d'arrêt de (dé)multiplication (10) est commandée par un verrou commutateur (11), qui se trouve en communication active avec un signal de freinage (f) et ledit signal de la pédale d'accélérateur (a).

17. Dispositif de réglage selon la revendication 2,
**caractérisé** en ce que ledit moyen d'arrêt de (dé)multiplication est, de façon alternative, commandé par un signal qui résulte du régime du moteur, de façon que la vitesse du moteur soit tenue à un haut niveau afin d'engendre un couple de freinage approprié.

18. Dispositif de réglage selon la revendication 2,
**caractérisé** en ce qu'au cas de fonctionnement à translation dans le régulateur de vitesse (5), ledit signal de régime du moteur (b) est comparé avec une grandeur de la vitesse du moteur préprogrammée, p.ex. la caractéristique de vitesse du moteur, qui dépend des valeurs de freinage spécifiques du moteur et acceptables de manière acoustique, et en ce que de l'influence appropriée est prise sur le signal de différence (c), de façon à achever une adaptation automatique, via ledit moyen de réglage (3, 4), aux valeurs préprogrammées.

19. Dispositif de réglage selon plusieurs des revendications 1 à 18,
**caractérisé** en ce qu'au cas de fonctionnement à translation, ledit signal de différence est de plus assujetti à l'influence d'un signal de charge (e), qui empêche que des effets de freinage du moteur et de bruit de moteur non agréables, en vertu de la mise en plein régime du moteur, soient produits.

20. Dispositif de réglage selon la revendication 3,
**caractérisé** en ce qu'un modulateur de pression (22) est configuré en tant que soupape de réglage de pression, qui est assujetti non seulement au signal de charge (e) mais aussi à un signal de régime de moteur (b) ou/et un signal de vitesse de sortie.

21. Dispositif de réglage plusieurs des revendications 1 à 20,
**caractérisé** en ce qu'une conduite de dérivation (29) est prévue entre ledit modulateur de pression (22) et la conduite d'aspiration de la pompe d'alimentation (36) afin de limiter la quantité de l'huile de réglage à la mesure requise.

22. Dispositif de réglage selon plusieurs des revendications 1 à 21,
**caractérisé** en ce qu'une mémoire (18) à mémoriser les caractéristiques du moteur est prévue, qui est disposée entre l'asservisseur du moteur (21) et la pédale de l'accélérateur (6) ou directement dans le moyen de réglage de la transmission (comme cela est illustré sur les figures 1 et 2), et qui prend de l'influence sur les signaux de réglage (g ou c) pour une optimisation de la consommation.

23. Dispositif de réglage selon la revendication 3,
**caractérisé** en ce qu'un programme de réserve est prévu pour une puissance maximale demandable de façon spontanée, que le conducteur peut présélectionner.

24. Dispositif de réglage selon les revendications 3 et 23,
**caractérisé** en ce que ledit moyen sélecteur pour la présélection dudit programme de réserve est également incorporé dans le moyen sélecteur principal (8) de façon à permettre le déclenchement d'une présélection appropriée, p.ex. par actionnement dudit levier sélecteur (8).

25. Dispositif de réglage selon les revendications 3, 23 et 24,
**caractérisé** en ce qu'après l'appel dudit programme de réserve ou respectivement du programme du mode de puissance pour une seule fois, il y a un changement automatique au programme régulier pour le mode de marche à consommation optimisée, notamment par effacement des signaux appropriés, entrés par le conducteur.

26. Dispositif de réglage selon les revendications 3, 23 à 25
**caractérisé** en ce qu'après le déclenchement de la présélection, ledit programme de réserve augmente le régime du moteur par changement approprié de la multiplication, moyennant un changement approprié de la (dé)multiplication de la transmission par les signaux de réglage ou respectivement ledit signal de différence (c).

27. Dispositif de réglage selon la revendication 4,
**caractérisé** en ce que ledit moyen de réglage de vitesse à maintenir une vitesse constante comprend un moyen sélecteur (28) qui, suivant l'appui sur un bouton ou une action correspondante du conducteur, déclenche un signal de marche constante (m), ce qui sert comme base pour le réglage de puissance afin de respecter la vitesse choisie.

28. Dispositif de réglage selon les revendications 4 et 27,
**caractérisé** en ce que la fonction de réglage de marche constante est supprimée ou respectivement surrégulée en réponse aux faits suivants:
(a) que le conducteur coupe le mode de réglage de marche constante ou entre une autre vitesse souhaitée moyennant ledit moyen sélecteur (28),
(b) que le niveau de puissance rendu disponible par le moteur est surpassé,
(c) que le conducteur actionne l'accélérateur ou respectivement la pédale de l'accélérateur (6) afin de demander une vitesse augmentée,
(d) que le système de réglage de marche est excessivement sollicité en vertu d'une décélération excessive du véhicule, causée p.ex. par une montée extrême,
(e) que la pédale du frein est appliquée afin de réduire la vitesse.

29. Dispositif de réglage selon les revendications 4, 27 et 28,
**caractérisé** en ce que la dernière vitesse mise en mémoire peut être appelée par actionnement correspondant audit moyen sélecteur (28) ("appel").

30. Dispositif de réglage selon une ou plusieurs des revendications 1 à 29,
**caractérisé** en ce que la partie constituante de l'action de freinage du côté du moteur est dosée en fonction de la charge et du régime du moteur, notamment de façon qu'un signal de limitation (non représenté) limite une quantité du régime du moteur en rapport avec un bruit acceptable du moteur.

31. Dispositif de réglage selon une ou plusieurs des revendications 1 à 30,
**caractérisé** en ce qu'une caractéristique du régime du moteur prédéterminée est mise en mémoire par le paramètre de temps dans le système de réglage de la vitesse de réglage, lequel paramètre de temps étant réglé par un moyen d'amortissement ou moyennant paramètres de temps différents en fonction de la position de la pédale de l'accélérateur ou respectivement la vitesse de mouvement de la pédale de l'accélérateur.

32. Dispositif de réglage selon plusieurs des revendications 1 à 31,
**caractérisé** en ce qu'un moyen d'hystérésis est incorporé ou respectivement intégré par programmation, qui est commandé par un signal de commutation au dedans dudit système de réglage de régime, et qui empêche un réglage de régime en fonction de temps ou/et de la charge.
